(19) Europäisches Patentamt / European Patent Office / Office européen des brevets

(11) **EP 4 696 588 A1**

(12) **EUROPEAN PATENT APPLICATION**

(43) Date of publication:
**18.02.2026 Bulletin 2026/08**

(21) Application number: **24194434.7**

(22) Date of filing: **13.08.2024**

(51) International Patent Classification (IPC):
**B62D 6/00** *(2006.01)*

(52) Cooperative Patent Classification (CPC):
**B62D 6/002;** B62D 6/008; B62D 6/02; B62D 15/025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **KB Intellectual Property GmbH & Co.
KG**
**82049 Pullach (DE)**

(72) Inventor: **JUNDT, Oliver**
**74394 Hessigheim (DE)**

(54) **A METHOD AND A VEHICLE SYSTEM FOR LIMITING A STEERING ANGLE**

(57)    A method for limiting a steering angle (10) of a steering system (50) of a vehicle is disclosed. The vehicle includes a safety device (60) for providing at least one safety value (65) indicative of a maximal lateral acceleration up to which the vehicle can be operated safely. The method includes receiving (S110) the safety value (65); determining (S120), based on the safety value (65), a maximal steering angle (15); and limiting (S130) the steering angle (10) by the determined maximal steering angle (15).

Fig. 1

EP 4 696 588 A1

**Description**

The present invention relates to method for limiting a steering angle, an associated vehicle system and, in particular, to a limitation of the steering angle to a value that is not critical for driving dynamics.

In conventional steering systems, the steering angle can be determined by an autonomous driver or an autonomous driving system to follow a predetermined path. Depending various conditions such as the load, this can lead to a critical situation for the driving dynamics. For example, the vehicle could roll over due to a target steering angle provided by the autonomous driving system. This could be prevented by limiting the steering angle, which would effectively counteract the risk of rolling over. However, this may also lead the vehicle to leave the predetermined path (on the road), which is not acceptable.

One option to avoid the critical situations is to limit the vehicle speed to non-critical values. DE 10 2015 013 143 A1 discloses a method for limiting the vehicle speed which relies on information about a future route. Based on the future route, a non-critical speed can be calculated which avoid sudden changes in the speed, which typically is not possible. However, the future route may not be an available information in the vehicle (or only available for the autonomous driving system).

Thus, there is a demand for a system and a method to avoid critical driving situations without relying on information about the future route.

At least some of the problems of the conventional systems as described before are overcome by a method of claim 1 or a vehicle system of claim 9. The dependent claims refer to further advantageous realizations of the subject matter of the independent claims.

The present invention relates to a method for limiting a steering angle of a steering system of a vehicle. The vehicle includes a safety device for providing at least one safety value indicative of a maximal lateral acceleration up to which the vehicle can be operated safely. The method includes:

- receiving the safety value;
- determining, based on the safety value, a maximal steering angle; and
- limiting the steering angle by the determined maximal steering angle.

The maximal steering angle shall maintain a cornering stability within physical limits. It is understood that this value depends on the vehicle speed and can maintain non-critical driving dynamics. Moreover, according to embodiments, the maximal steering angle is applied for both directions in the same way, i.e. the same maximal steering angle may be applied when making left turns and when making right turns.

According to embodiments, the steps of the method can be carried out in different devices, components or systems of the vehicle. For example, the safety value may be sent, e.g. via a CAN (controlled area network), from the safety device to a vehicle system. This vehicle system may calculate or determine the maximum steering angle and sends it (e.g. via CAN) to a (highly) automated driving system, which then may take this into account when calculating the steering angle for the steering system. According to another embodiment, the safety device itself may determine the maximum steering angle and sends it to the steering system. The limitation of the steering angle would then take place in the steering system and not in the automated driving system. For example, the safety device may include various components including sensors and one or more processing units. One of the sensors may provide the safety value as an exemplary acceleration value and one of the processing unit within the safety device can receive the safety value from the sensors and determines the maximal steering angle and sends it from the safety device to the steering system, where the limitation happens.

Optionally, the step of determining the maximal steering angle includes:

- determining a non-critical steering angle (or a limit thereof) as function of a vehicle speed; and
- adding an offset to the non-critical steering angle to obtain the maximal steering angle.

The offset may be determined by (intentionally) allowing critical driving situations which are still within physical limits. The speed does not need to be known but may represent a parameter. The offset is determined so that the maximal steering angle with the added offset may result in critical driving situations for the vehicle which, however, are still manageable (within physical limits). The offset may be positive or negative, i.e. a (positive) value may be added to or subtracted from non-critical steering angle. The latter one may be utilized when a roll-over is more likely so that there is need to further improve the safety. As for a positive offset, the manageable driving situation may correspond to cases where interventions from automated stability systems can easily safe the driving situation. In other words, it may be determined that the steering input can lead to a roll over or to another vehicle instability but limited in height and change rate to a degree that the stability system such as an electronic stability program can easily handle and safe the situation with its intervention(s).

Optionally, the step of determining the maximal steering angle further includes determining, based on the safety value, a maximal steering angle speed. Optionally, the step of limiting the steering angle further includes limiting the steering angle speed by the determined maximal steering angle speed.

Optionally, the at least one safety value provided by the safety device depends on, or includes, at least one of the following:

- maximal lateral acceleration,
- a maximal turning rate,
- a load,
- a height of a vehicle center of gravity,
- a wheelbase,
- a self-steering gradient,
- a maximum turning rate.

Optionally, the vehicle includes an autonomous driving system configured to provide at least a partial autonomous driving operation of the vehicle, the method further comprising determining, by the autonomous driving system, target steering angles to drive a path while complying with the determined maximal steering angle.

Within the present disclosure, the autonomous operation shall include all degrees of autonomous driving: from an assistant driving (e.g. a lane keeping assist) to a partially or a fully autonomous driving. The actual steering angle can again be obtained from the vehicle steering system or from a vehicle control unit or any other vehicle component.

Optionally, the safety device includes or is an electronic stability program, ESP, system installed in the vehicle and the step of receiving the at least one safety value may be performed continuously. Then, the step of determining the maximal steering angle may be repeated when the safety value has changed. The ESP system may be able to estimate or to learn the maximal lateral acceleration from previous behaviors of the vehicle (e.g. during cornering). This value may depend on the total load, on the position of the center of gravity, the wheelbase, and other parameter which are known to the ESP system or can be learned/estimated.

Optionally, the step of receiving further includes receiving an actual steering angle and a vehicle speed, the vehicle speed being a current vehicle speed or a planned vehicle speed. Then, optionally, the method may further includes:

- comparing the actual steering angle with the maximal steering angle for the receive vehicle speed,
- issuing a warning if the actual steering angle has reached the maximal steering angle (or when the steering angle has entered a warning range before the maximal steering angle is reached).

The warning may be issued in conjunction to together with or shortly before an intervention of the ESP to mitigate the critical situation.

This method or part thereof may also be implemented in software. Therefore, embodiments of the present invention can be implemented on a vehicle system with a processor configured by software or a software module. Accordingly, embodiment relate also to a computer program having a program code for performing the method, when the computer program is executed on a processor. Further embodiments relate to a machine-readable storage device having stored thereon a machine-executable code including instructions, wherein the instructions are adapted to perform steps of the methods as described before, when executed on a computer or a processor.

Further embodiments relate to a vehicle system for limiting a steering angle of an active steering system of a vehicle. The vehicle includes again a safety device for providing at least one safety value indicative of a maximal lateral acceleration up to which the vehicle can be operated safely. The vehicle system includes a receiver adapted to receive the at least one safety value and a processor. The processor is adapted to determine, based on the at least one safety value, a maximal steering angle, and to limit the steering angle by the determined maximal steering angle.

Further embodiments relate a vehicle, in particular a commercial or utility vehicle (e.g. a truck or bus), with an electronic stability program, ESP, system configured to provide at least one safety value indicative of a maximal lateral acceleration up to which the vehicle can be operated safely. The vehicle includes a vehicle system as described before.

Embodiments overcome the above-mentioned problems of conventional systems by determining a maximal steering angle, e.g. in advance, as function of the (future) speed. If this information is known, the autonomous driving system can take this into account when determining the vehicle speed for an upcoming curve. This will ensure that no critical situations such as rolling over or leaving the path can occur. In conventional systems the critical situations have to be handled by the ESP. The ESP will try to prevent this by wheel-specific braking and engine intervention (to reduce the speed).

However, there are physical limits to this. For example, if the vehicle is in danger of rolling over, the lateral acceleration must be reduced more quickly by deceleration (braking) than it builds up through steering movements.

Limiting the steering angle (possibly including limiting the steering angle speed) according to embodiments effectively counteracts this risk of rolling over or that the vehicle is leaving the predetermined path (road).

Some examples of the systems and/or methods will be described in the following by way of examples only, and with respect to the accompanying figures, in which:

Fig. 1    depicts a schematic flow diagram of a method for limiting a steering system according to an embodiment of the present invention.

Fig. 2    depicts a vehicle system for limiting a steering system within a vehicle infrastructure according to further embodiments.

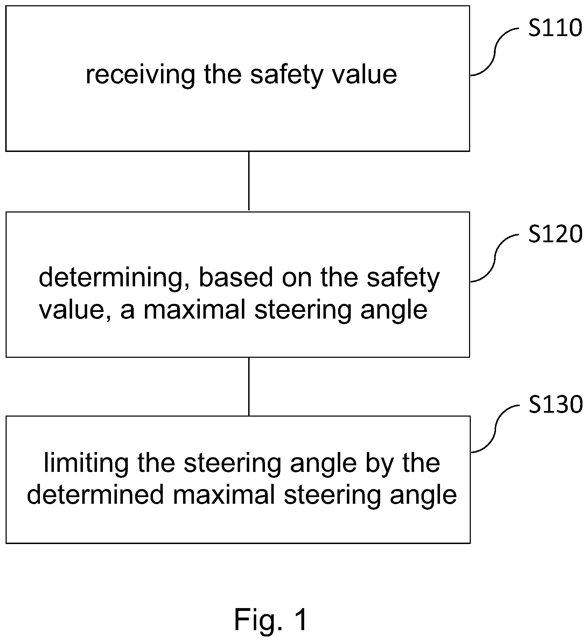

**Fig. 1** depicts a schematic flow diagram of a method for limiting a steering angle of a steering system of a vehicle. The vehicle includes a safety device for providing at least one safety value indicative of a maximal lateral acceleration up to which the vehicle can be operated safely. The method includes:

-    receiving S110 the safety value;
-    determining S120, based on the safety value, a maximal steering angle; and
-    limiting S130 the steering angle by the determined maximal steering angle.

Therefore, embodiments are usable for vehicles in which the steering angle can be limited by a technical system. These are primarily vehicles with an active steering system that can set a steering angle by means of electronic signals (e.g. transmitted via a CAN bus). This is the case for vehicles that are able to drive at least partially autonomously at least some of the time. Therefore, according to embodiments, the steering system may be an active steering system, and the vehicle may include an autonomous driving system (autonomous driver).

Optionally, the method includes further steps defining functions as will be described for the vehicle system below. It will also be appreciated that the method steps can be carried out in different order. Moreover, this method may be a computer-implemented method. A person skilled in the art would readily recognize that steps of various above-described methods may be performed or caused by programmed computers or processors. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

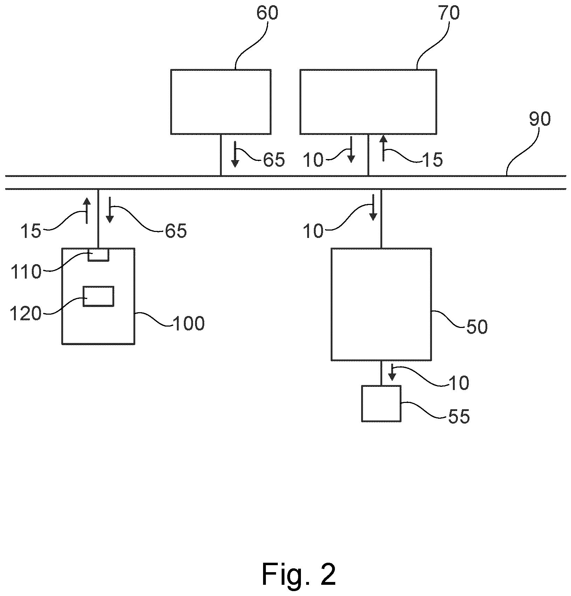

**Fig. 2** depicts a vehicle system 100 within a vehicle infrastructure configured to carry out the method of Fig. 1. The vehicle infrastructure includes, in addition to the vehicle system 100, the steering system 50 with an associated steering actuator 55 to achieve a steering effect, the safety device 60, and an autonomous driving system 70. According to the depicted embodiment, these components and more are connected with each other via a vehicle bus 90 (e.g. a CAN bus). The steering system 50 may be an active steering system that is able to steer the vehicle based on a steering angle 10 which may be provided by the autonomous driving system 70 or may be generated by the steering system 50 itself. The safety device 60 may be an ESP system which is configured to provide the safety value(s) 65 indicative of a maximal lateral acceleration up to which the vehicle can be operated safely.

According to embodiments, the vehicle system 100 is independent from the steering system 50 and comprises a receiver 110 (e.g. an interface for the exemplary CAN bus 90) and a processor 120. The receiver 110 receives the safety value(s) 65 and the processor 120 is configured (e.g. by software) to determine, depending on the received safety value(s) 65, a maximal steering angle 15. The processor 120 is further configured to limit the steering angle 10 by the determined maximal steering angle 15. This may be achieved by providing the maximal steering angle 15 to the steering system 50. The vehicle system 100 may be a braking system, a vehicle control unit, an engine control system, a transmission controller, or any other system of the vehicle, or part thereof. The calculated maximal steering angle 15 may be a function of parameter such as the vehicle speed and can be determined based on a vehicle model (e.g. a single-track model) taking into account various vehicle parameters.

Advantageously, according to embodiments, the vehicle system 100 may first calculate an upper limit of non-critical steering angles depending on the vehicle speed and other variables such as load or a height of center of gravity (of the vehicle). Vehicle-specific properties may also be taken into account such as the wheelbase or the self-steering gradient. This calculation can be done by the ESP system 60, for example. For this, the ESP system 60 in a commercial vehicle may include a yaw controller or a directional controller that calculates a reference rate of rotation from the steering angle 10. A roll stability program (RSP) may be part of the ESP system 60 and is adapted to prevent rolling over. For this, it calculates a non-critical lateral acceleration limit (maximal lateral acceleration) based on the load and a height of the center of gravity. Apart from calculating or estimating the maximum lateral acceleration, the ESP system 60 may further calculate or estimate a maximum turning rate. This may then be converted into the maximum steering angle 15 using the single-track model, for example.

Then, when the upper limit of non-critical steering angles is calculated, according to embodiments, the vehicle system 100 may determine the maximal steering angle 15 by adding an offset to the calculated upper limit of non-critical steering angles. The offset could be selected so that a specified path of travelling is only deviated from in extreme exceptional situations. Applying steering angles 10 up the determined maximal steering angel 15 can thus still lead to ESP interventions, but these interventions will then be successful within the physical limits. Thus, the selection of the offset compromises between not too large (resulting in non-manageable situations) and not too small (not able to follow the path).

The ESP systems 60 shall operate to prevent any instable situation by appropriate ESP interventions, which may include wheel-specific braking interventions and/or engine interventions (to reduce the speed). However, there are physical limits to this. For example, if the vehicle is about of roll over, the lateral acceleration must be reduced more quickly by deceleration (braking) than it builds up through steering movements.

Embodiments utilize this available region, where ESP intervention may occur, but which are still manageable.

The safety value(s) 65 are the parameters which are utilized in the calculation and as mentioned before they include at least one of the following: maximal lateral acceleration, a maximal turning rate, a load, a height of a vehicle center of gravity, a wheelbase, a self-steering gradient, a maximum turning rate. The ESP system 60 may update the safety value(s) continuously and the step of determining the maximal steering angle 15 may be repeated when the safety value 65 has been updated. For estimating the maximal lateral acceleration, the ESP system 60 may utilize a machine learning algorithm or other technologies to estimate this value.

The usage of the maximal lateral acceleration has some advantages. For example, the ESP system 60 will not normally be able to determine a limit of the steering angle 10 from a limit of a maximum turning rate, because the turning rate or its target value - or the maximum and minimum, if uncertainties in the calculation of the target turning rate shall be covered - depends on the steering angle itself. For this reason, the maximum lateral acceleration may be utilized or determined, which does not depend on the steering angle 10.

In the following, a concrete embodiment is set out in detail for a commercial vehicle equipped with an autonomous driving system 70 (for at least temporary and at least semi-autonomous driving), a braking system with ESP 60, a steering system 50 which can set a steering angle 10 based on an electronic specification, an autonomous driving system 70 which calculates a target value for the steering angle 10 in order to follow a route ahead of the vehicle. As depicted in Fig. 2, all above systems are connected via the CAN bus 90 for the purpose of exchanging information and data. Thus, in this embodiment, the vehicle system 100 is the brake system.

The ESP system 60 calculates a limit of non-critical lateral accelerations below which it is unlikely that the vehicle will roll over. Based on the maximal lateral acceleration, the maximum steering wheel angle (angle of the steering wheel) is calculated using a single-track model yielding

$$\delta\_max = a\_ymax \left( l/v^2 + Eg \right) * iL , \qquad\qquad (1)$$

wherein $\delta$ is the steering wheel angle, a_ymax is the maximal lateral acceleration, v is the speed of the vehicle, l is the wheelbase of the vehicle, Eg is the self-steering gradient, iL is the steering ratio between steering wheel angle and (wheel) steering angle. For example, with a_ymax= 4 m/s$^3$, v= 65 km/h, l = 3.6m EG = 0.004, iL = 20, this results in a $\delta$_max of approx. 69 degrees.

An offset of 15 degrees or 20% (e.g. the larger value of both may be taken) may be added to this maximum steering angle. This results in a steering wheel angle of 84 degrees, which should not be exceeded.

According to embodiments the steering angle 10 may either refer to the steering wheel angle or to the wheel steering angle. This value may be sent as maximum steering angle 15 from the brake system to the steering system 50 via the exemplary CAN bus 90. Then, the steering system 50 limits the maximum steering angle 15 to this value - even if the autonomous system 70 requests a larger value. If this is the case, the ESP system 60 may intervene as it does today and may try to prevent the vehicle from rolling over by reducing the speed. Because the steering angle 10 is limited, the build-up of lateral acceleration is also limited, so that the ESP system 60 will be more successful in preventing a roll-over than without a steering angle limit.

Alternatively, or in addition, the calculated maximal steering angle 15 can be sent to the autonomous driving system 70 via the CAN bus 90. The autonomous driving system 70 may then plan the future driving considering this limitation (e.g. when panning the travel speed).

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks labeled such as "vehicle system", "safety device" etc., may be provided through the use of dedicated hardware, such as "a signal provider", "a signal processing unit", "a processor", "a controller", etc. as well as hardware capable of executing software in association with appropriate software. Moreover, any entity described herein as "device" or "system" may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Finally, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

LIST OF REFERENCE SIGNS

| | |
|---|---|
| 10 | steering angle |
| 15 | maximal steering angle |
| 50 | (active) steering system |
| 55 | steering actuator(s) |
| 60 | safety device (e.g. ESP) |
| 65 | safety value(s) |
| 70 | (partially) autonomous driving system |
| 90 | vehicle bus |
| 100 | vehicle system |
| 110 | receiver |
| 120 | processor |

**Claims**

1. A method for limiting a steering angle (10) of a steering system (50) of a vehicle, the vehicle including a safety device (60) for providing at least one safety value (65) indicative of a maximal lateral acceleration up to which the vehicle can be operated safely,
   **characterized by:**

   - receiving (S110) the safety value (65);
   - determining (S120), based on the safety value (65), a maximal steering angle (15); and
   - limiting (S130) the steering angle (10) by the determined maximal steering angle (15).

2. The method according to claim 1, wherein the step of determining the maximal steering angle (15) includes:

   - determining a non-critical steering angle as function of a vehicle speed; and
   - adding an offset to the non-critical steering angle to obtain the maximal steering angle,

wherein the offset being determined to allow critical driving situations which are still within physical limits.

3. The method according to claim 1 or claim 2,

   wherein the step of determining (S120) the maximal steering angle (15) further includes determining, based on the safety value (65), a maximal steering angle speed, and
   wherein the step of limiting (S130) the steering angle (10) further includes limiting the steering angle speed by the determined maximal steering angle speed.

4. The method according to any one of claims 1 to 3, wherein the at least one safety value (65) provided by the safety device (60) depends on or includes at least one of the following:

   - maximal lateral acceleration,
   - a maximal turning rate,
   - a load,
   - a height of a vehicle center of gravity,
   - a wheelbase,
   - a self-steering gradient,
   - a maximum turning rate.

5. The method according to any of claims 1 to 4, the vehicle including an autonomous driving system (70) configured to provide at least a partial autonomous driving operation of the vehicle, the method further comprising:
   determining, by the autonomous driving system (70), target steering angles to drive a path while complying with the determined maximal steering angle (15).

6. The method according to any of claims 1 to 5, wherein the safety device (60) includes or is an electronic stability program, ESP, installed in the vehicle and the step of receiving (S110) the at least one safety value (65) is performed continuously and the step of determining (S120) the maximal steering angle (15) is repeated when the safety value (65) has changed.

7. The method according to any of claims 1 to 6, wherein the step of receiving (S110) further includes receiving an actual steering angle and a vehicle speed, the vehicle speed being a current vehicle speed or a planned vehicle speed, and wherein the method further includes:

   - comparing the actual steering angle with the maximal steering angle for the receive vehicle speed,
   - issuing a warning if the actual steering angle has reached the maximal steering angle.

8. A machine-readable storage device having stored thereon a machine-executable code including instructions, wherein the instructions are adapted to perform acts of the methods according any one of claims 1 to 7, when executed on a computer or a processor.

9. A vehicle system (100) for limiting a steering angle (10) of an active steering system (50) of a vehicle, the vehicle including a safety device (60) for providing at least one safety value (65) indicative of a maximal lateral acceleration up to which the vehicle can be operated safely,
   **characterized by:**

   a receiver (110) adapted to receive the at least one safety value (65); and
   a processor (120) configured:

   - to determine, based on the at least one safety value (65), a maximal steering angle (15),
   - to limit (S130) the steering angle (10) by the determined maximal steering angle (15).

10. The vehicle system (100) according to claim 9, wherein the processor (120) is further adapted to

   include in the determination of the maximal steering angle (15) a determination, based on the safety value (65), of a maximal steering angle speed, and
   include in the limitation of the steering angle (10) a limitation of the steering angle speed by the determined maximal steering angle speed.

11. A vehicle, in particular commercial vehicle, with an electronic stability program, ESP (60), configured to provide at least one safety value (65) indicative of a maximal lateral acceleration up to which the vehicle can be operated safely, **characterized by:**
a vehicle system (100) according to claim 9.

receiving the safety value — S110

determining, based on the safety value, a maximal steering angle — S120

limiting the steering angle by the determined maximal steering angle — S130

Fig. 1

Fig. 2

Europäisches
Patentamt

European
Patent Office

Office européen
des brevets

# EUROPEAN SEARCH REPORT

**Application Number**

EP 24 19 4434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 932 762 A1 (GREAT WALL MOTOR CO LTD [CN]) 5 January 2022 (2022-01-05) | 1,3-11 | INV.<br>B62D6/00 |
| A | * paragraphs [0043] - [0076], [0120]; figures 1-4 * | 2 | |
| | ----- | | |

**TECHNICAL FIELDS SEARCHED (IPC)**

B62D

The present search report has been drawn up for all claims

| Place of search | Date of completion of the search | Examiner |
|---|---|---|
| The Hague | 14 January 2025 | Kulozik, Ehrenfried |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

EP 4 696 588 A1

## ANNEX TO THE EUROPEAN SEARCH REPORT
## ON EUROPEAN PATENT APPLICATION NO.

EP 24 19 4434

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| EP 3932762 | A1 | 05-01-2022 | CN | 110949370 A | 03-04-2020 |
| | | | EP | 3932762 A1 | 05-01-2022 |
| | | | WO | 2020187259 A1 | 24-09-2020 |

**REFERENCES CITED IN THE DESCRIPTION**

**Patent documents cited in the description**

- DE 102015013143 A1